# EUROPEAN PATENT APPLICATION

(11) **EP 4 246 362 A1**
(43) Date of publication of application: **20.09.2023**
(21) Application number: 22162686.4
(22) Date of filing: 17.03.2022
(51) Int. Cl.: G06F 30/23, G06F 30/17, G06T 17/20

(54) **MODELLING AN OBJECT, DETERMINATION OF LOAD CAPACITY, IMPROVEMENT OF THE DESIGN AND GENERATING COMPONENT, SYSTEM**

(71) Applicant: Siemens Industry Software NV, 3001 Leuven (BE)
(72) Inventor: Beriot, Hadrien, 78110 Le Vesinet (FR); Van Putten, Thijs, 2220 Hallaar (BE); Boussuge, Flavien, 78120 Rambouillet (FR)
(74) Representative: Siemens Patent Attorneys

(57) **Abstract**

The invention relates to a computer-implemented method for modelling an object (CPT) subjected to boundary conditions (BCD) from a three-dimensional object model (CAD), wherein said object model (CAD) defines a component (CMP) by a three-dimensional boundary representing format (BRF), comprising:
(a) providing boundary conditions (BCD) including loads and/or constraints to said object (CPT),
(b) providing said object model (CAD).

To conventionally solve differential equations through over the object amending the object, the meshing and maybe other adjustments are necessary. The invention proposes to save the effort by:
(c) tessellating the boundary representation of said object model (CAD) obtaining an object tessellation (OBT).
(d) applying an approximate convex decomposition (ACD) to the object tessellation (OBT) obtaining three-dimensional cells (3DC) respectively defined from each other by splitting planes (SPP),
(e) generating a numerical model (NMM) by applying discontinuous Galerkin method (DGM) to said three-dimensional cells (3DC). The invention further relates to the determination of the load capacity, the improvement of the design, or the generation, in each case, of the component.

## Description

The invention relates to a computer-implemented method for modelling an object subjected to boundary conditions from a three-dimensional object model, wherein said object model defines a component by a three-dimensional boundary representing format, comprising:
(a) providing boundary conditions including loads and/or constraints to said object,
(b) providing said object model.

### FIELD OF THE INVENTION

Understanding how a component or product assembly reacts under stress, vibration or thermal constraints is critical in any industry. Simple linear-statics analysis may for instance be performed, to calculate the structural response due to external forces, and evaluate whether displacement and deformation are acceptable for the product of interest. As products and materials become increasingly complex, engineers require more advanced simulation tools. Nowadays, the numerical approximation of Partial Differential Equations (PDEs) for Mechanical Analysis is predominantly addressed with Finite Element Analysis (FEA), owing to its robustness and generality. Software vendors typically consolidate analysis tools for different applications into a Computer-Aided Engineering (CAE) software suite that offers both structural and other performance analysis. The CAE suite leverages design information from the Computer-Aided Design (CAD) phase and the CAE model can be updated when CAD design changes are made. Accordingly, Engineering departments in industry can use a single user interface to address structural and other performance calculations of interest.

### BACKGROUND OF THE INVENTION

Finite Element Analysis (FEA) breaks the CAD-CAE integration because of the necessary meshing operation:
(1) In FEA the model size is dictated by the smallest geometrical details, and for the model to remain tractable, the geometry is first idealized before meshing (defeaturing). CAD models often include multiple geometrical details (holes, chamfers, fillets, imprints), which
   i) are not necessarily relevant for the finite element simulation,
   ii) are very difficult to mesh, and
   iii) if they can be meshed, create additional degrees of freedom, thereby hindering the performance of the method.
   As a result, the geometries are often simplified prior to the analysis.
(2) Analysts spend a large amount of time defeaturing and cleaning up the CAD geometry to be able to perform analysis. This geometrical defeaturing or idealization, creates large non-automated pre-processing efforts, which often dominate the analysis time, and breaks the integration between Computer-Aided Design (CAD) and Computer-Aided Engineering (CAE), by creating two different versions of the same design.
(3) The FEA simulation workflow is mesh-centric, instead of being CAD-centric.

The mesh-centric FEM-dominated paradigm is an obstacle to the spread of simulation for structural analysis because the broad mass of design engineers never want to become familiar with this detailed and specific analysis technique.

As opposed to classical finite element methods which rely on a globally continuous approximation space, another class of methods, allows the basis to be discontinuous across the elements. These methods generally fall in the scope of the Discontinuous Galerkin methods (see e.g. [Cockburn, Bernardo, George E. Karniadakis, and Chi-Wang Shu. "The development of discontinuous Galerkin methods." Discontinuous Galerkin Methods. Springer, Berlin, Heidelberg, 2000. 3-50]).

The discontinuous Galerkin methods (often referred to as DG methods) are used for solving differential equations in hyperbolic, elliptic, parabolic and mixed form problems. They combine features of the finite element and the finite volume framework, e.g., in electrodynamics, fluid mechanics and plasma physics.

While these methods can be operated on conventional finite element meshes - and that is in fact how they are mostly employed in the literature - their discontinuous nature could in theory be exploited to relax the requirements on the geometry partitioning. With such a discontinuous basis, a mesh can be composed of polytopic elements with arbitrary polyhedral shape and which interfaces are not necessarily matching (with hanging nodes and edges). For example, in Antonietti et al. [Antonietti, Paola F., et al. "Review of discontinuous Galerkin finite element methods for partial differential equations on complicated domains." Building bridges: connections and challenges in modern approaches to numerical partial differential equations. Springer, Cham, 2016. 281-310] the DG method is applied on meshes obtained from composite agglomeration of conventional finite elements. The advantage is that the resulting cells can then incorporate small geometric details reducing drastically the pre-processing time. One important restriction for the construction of these elements is that their non-convexity remains marginal according to Cangiani et al. [Cangiani, Andrea, et al. hp-Version discontinuous Galerkin methods on polygonal and polyhedral meshes. Springer, 2017].

Another class of methods which may be applied on non-conventional geometry partitioning are the Trefftz methods, a method for the numerical solution of partial differential equations named after the German mathematician Erich Trefftz (1888-1937). An overview over the Trefftz methods is given in Eisuke et al. [Kita, Eisuke, and Norio Kamiya. "Trefftz method: an overview." Advances in Engineering software 24.1-3 (1995): 3-12] and Qin et al. [Qin, Q.H., 2005. Trefftz finite element method and its applications].

In most Trefftz methods, the approximation space is also discontinuous across the elements. The shape functions are therefore different for every element and are constructed directly in the physical space (no mapping to a parent element). This theoretically allows the method to also operate "on arbitrarily shaped elements", also incorporating some smaller geometrical features. The Trefftz methods have been successfully applied to solve:
- elasticity Freitas et al. [(1) De Freitas, J.A.T. and Cis-masiu, C., 2000. Developments with hybrid-Trefftz stress and displacement elements; (2) De Freitas, J.T. and Bussamra, F.L.S., 2000. Three-dimensional hybrid-Trefftz stress elements. International Journal for Numerical Methods in Engineering, 47(5), pp.927-950.],
- thermal by Qin et al. [Qin, Q.H., 2005. Trefftz finite element method and its applications], stress-thermal by Grysa et al. [Grysa, K. and Macia g, A., 2011. Solving direct and inverse thermoelasticity problems by means of Trefftz base functions for finite element method. Journal of Thermal Stresses, 34(4), pp.378-393],
- elastoplastic by De Freitas et al. [De Freitas, J.T. and Wang, Z.M., 1998. Hybrid-Trefftz stress elements for elasto-plasticity. International Journal for Numerical Methods in Engineering, 43(4), pp.655-683]
and acoustic problems by Deckers et al. [Deckers, Elke, et al. "The wave based method: An overview of 15 years of research." Wave Motion 51.4 (2014): 550-565].

Their principle lies in handling physics-based shape functions, which verify exactly the governing equation. This in turn allows removing all volume integrals from the formulation according to Kita et al. [Kita, E. and Kamiya, N., 1995. Trefftz method: an overview. Advances in Engineering software, 24(1-3), pp.3-12] and Herrera et al. [Herrera, I., 2000. Trefftz method: a general theory. Numerical Methods for Partial Differential Equations: An International Journal, 16(6), pp.561-580]. This absence of volume parametrization (only surfaces are needed for the discretization) is also beneficial to reduce the solver data requirements (no multi-million volume elements model is generated).

In Trefftz methods also, some geometrical restrictions apply on the elements, as it is difficult to construct an appropriate Trefftz basis on complex strongly concave configurations, see e.g. Deckers et al. [as above] for acoustics or Sokolnikoff et al. [Sokolnikoff, Ivan Stephen, and Robert Dickerson Specht. Mathematical theory of elasticity. Vol. 83. New York: McGraw-Hill, 1956] for elasticity.

In summary, none of the prior art approaches provides a 3D-simulation capability that is fast, intuitive, and sufficiently accurate. This confirms that there is room in the state of the art for more user-friendly facilitations to achieve a novel mechanical analysis methodology and process that can be used by the wider design-engineers community, complementary to the existing FEA user base.

Currently, the industry standard to solve boundary value problems in the field of Computer-Aided Engineering [CAE] is the finite element method. The finite element method not only transforms continuous equations into discrete approximations but also requires that the domain considered be discretized. This discretization requires the simulation domain to be divided into a finite number of geometrically conforming elements. Taken as a whole, this set of elements and their connections form a finite element mesh. The shapes of the elements are limited to a few simple ones, namely polyhedra with 4, 5 or 6 faces (tetrahedrons, hexahedra, prisms, and pyramids) in three dimensions. The local solution within an element is approximated by piecewise polynomials. The finite element method is highly versatile and is routinely applied in many disciplines of engineering and science. Nowadays, many commercial software packages (such as the Siemens NX Nastran product [NX 2017]) implementing the finite element method are available. However, the cost and scalability of finite element-based technologies is bounded not only by the computation time but also (and often to a greater extent) by the time-consuming tasks of converting CAD assemblies (sometimes containing thousands of components) to idealized finite element mesh models. In practice, generating suitable meshes for high-fidelity CAD models faces many issues both during geometry preparation and mesh generation. Indeed, geometry preparation often contain excessive details (e.g., holes, chamfers, fillets, imprints) that impact the computational cost and that are not essential for FEM analysis. Hence, analysts spend a large amount of time defeaturing and cleaning up the CAD geometry to be able to perform analysis. This also breaks the CAD-CAE integration because the designers and finite element analysts end up working on different versions of the same design.

In contrast to conventional finite element methods, alternative approaches (called "meshless" approaches) have been proposed by the simulation community to overcome the need to create an equivalent mesh model of a given CAD model. In "meshless" methods the spatial domain is not discretized by elements, which consequently removes the need to clean/defeature the geometry. The full manufactured geometry (containing small geometric details) can be used during the resolution. Instead of generating a mesh, "fully meshless" approaches, such as the ones based on the moving point technique [Onate 1996] uses scattered point distributed throughout the computation domain. Another interesting class of methods are the fictitious domain methods or CutFEM [Duster 2008, Burman 2015], in which the original, un-simplified geometry is immersed into a Cartesian grid which does not need to conform to the geometry. A special quadrature treatment is applied on the so-called immersed cells, which are partly inside and partly outside the geometry. The rest of the elements, not in contact with the boundaries of the geometry, are typically modeled using a classical Finite Element methodology. This approach can lead to efficient CAD-embedded approaches without needing to compute a conventional mesh of the geometry nor to defeature it. One limitation is however the applications involving thin structures, such as metal or composite plates, which are omnipresent in CAE applications. There, an element size close to the thickness of the plate needs to be used, which hinders the overall performance of the approach.

### SUMMARY OF THE INVENTION

It is one object of the invention to overcome or at least mitigate the problems identified with the prior art as explained above.

It is an object of the invention to perform numerical simulation of engineering CAD models directly on the original, without simplifying the geometry (CAD-embedded simulation).

It is another object of the invention to preferably not require much user CAE-knowledge for performing CAE analysis.

The object of the invention is achieved by the independent claims. The dependent claims describe advantageous developments and modifications of the invention.

In accordance with the invention there is provided a solution for the above described problems by the incipiently defined method with the additional steps:
(c) tessellating the boundary representation of said object model obtaining an object tessellation.
(d) applying an approximate convex decomposition to the object tessellation obtaining three-dimensional cells (3DC) respectively defined from each other by splitting planes,
(e) generating a numerical model by applying discontinuous Galerkin method to said three-dimensional cells.

The invention further relates to the determination of the load capacity, the improvement of the design, or the generation, in each case, of the component.

Said boundary conditions including loads and/or constraints may include static or dynamic effects. This enables the usage of the invention for solving problems related to structural dynamics and/or thermal effects and/or acoustic effects and/or the field of Noise-Vibration-Harshness [NVH].

To conventionally solve differential equations through over the object, amending the object, the meshing and often other adjustments are necessary. These measures are time consuming. The invention beneficially helps to save these efforts.

According to the invention a three-dimensional boundary representing format may be a Computer-Aided Design Boundary Represented format (such as the .STEP format, a Standard for the Exchange of Product Data) or a tessellated mesh format (such as the .stl format).

The invention intends to directly apply the boundary conditions (loads and constraints) of the boundary value problem on the Computer-Aided Design model or the tessellated model.

The invention enables beneficially structural solver methodologies for non-CAE specialists:
(1) The modelling according to the invention may be done meshless, and operated directly on CAD and tessellated models,
(2) The modelling according to the invention is flexible and adaptive and may be done with automatic order (p) and/or mesh (h)-refinement, and
(3) The modelling according to the invention enables GPU parallelism to reach run times closer to minutes than hours.

The invention enables a new modelling and simulation methodology and opens these technologies to the wider community of design engineers. Engineers are enabled to assess their geometry structural performance in only a couple of minutes and without advanced CAE expertise. The invention only requires a 3D simulation capability that is sufficiently performant to enable a fast, intuitive, and sufficiently accurate analysis result of the designed structure.

Beneficially the invention introduces a method for performing numerical simulation of engineering Computer-Aided Design models directly on the original geometry (CAD-embedded simulation). The invention combines two techniques:
i) the decomposition of the initial geometry into nearly convex sub-regions or "elements" using an Approximate Convex Decomposition (Approximate Convex Decomposition) algorithm, and
ii) applying a discontinuous computational scheme (such as the Discontinuous Galerkin or the Trefftz Method - wherein Trefftz Discontinuous Galerkin (TDG) is considered to belong to Discontinuous Galerkin (DG) methods).

By applying a discontinuous computational scheme the invention solves an elliptic boundary value problem described by partial differential equations on the resulting non-conformal, polyhedral partitioning of the geometry.

The Approximate Convex Decomposition algorithm - applied by the invention is mainly applied for the automatic collision detection of objects in complex scenes developed for computer graphics enhancement. Fast and precise collision detection is important to achieve realistic animations in video games, virtual reality, and robotics and a rich literature has been devoted to the topic [Weller 2013].

The invention preferably applies a subclass of Approximate Convex Decomposition methods, namely the class of volumetric Approximate Convex Decomposition algorithms known e.g. from Mamou et al. [Mamou, K., Lengyel, E. and Peters, A.K., 2016. Volumetric hierarchical approximate convex decomposition. In Game Engine Gems 3 (pp. 141-158). AK Peters]. The invention applies this technology partly and deviating from its original purpose. Instead of collision avoidance in graphical animation the invention uses Approximate Convex Decomposition for the pre-processing of geometries in Computer Aided Engineering.

The traditional output of volumetric Approximate Convex Decomposition, is a set of convex hulls approximating the original geometry. As an intermediate step of the algorithm, a set of clipping planes are generated by the algorithm based on concavity, balance of volume, and possibly also, symmetry criteria. In the context of the invention the clipping planes generated during the application of the Approximate Convex Decomposition methodology this preliminary result is of particular interest.

These clipping planes, splitting planes or simply 'splitters' may be extracted, e.g., represented by a set of plane equations in three dimensions. These splitting planes may be used to create a volumetric segmentation of the original geometry, generating subdomains or three-dimensional cells respectively defined from each other by these splitting planes for generating a numerical model respectively for a subsequent numerical method - basically for solving the underlying three-dimensional given physical phenomenon - like structural behavior, thermal transport, or wave propagation. Although of arbitrary shape, the concavity of the resulting polyhedral cells is sufficiently reduced, maybe minimized, which makes them suitable candidates for numerical simulation, using a DG or Trefftz-based approach. This suppresses the need to neither mesh the object nor to perform time-consuming idealisations or defeaturing geometric transformations prior to the analysis.

In other words the method may include steps of:
1. Importing the three-dimensional object using a Computer-Aided Design Boundary Represented format (such as the .STEP format, a Standard for the Exchange of Product Data) or a tessellated mesh format (such as the .stl format) and applying the boundary conditions (loads and constraints) of the boundary value problem directly on the Computer-Aided Design model or the tessellated model.
2. Tessellating finely the object while preferably keeping the geometrical error well controlled across the model.
3. Performing (steps of the) approximate convex decomposition (algorithm) to obtain bisection planes respectively said splitting planes. The tessellation of the object is then segmented respectively bisected using these splitters, and the model data structure is created decomposing the object into three-dimensional cells.
4. After this modelling, for determining the load capacity of said component, preferably:
   solving the object model using a discontinuous finite element method (=applying a discontinuous Galerkin method) or preferably Trefftz, possibly adaptive, approach and
5. Preferably - then post-processing on the initial object.

Applying approximate convex decomposition may preferably be continued until a convexity measure is obtained for
- every object tessellation and/or
- every three-dimensional cell
fulfilling a predefined convexity threshold criterion. As a convexity measure any convexity estimator may be used as commonly used in the analysis of shape.

Another preferred embodiment of the invention provides determining the load capacity of said component comprising:
(f) solving said numerical model by using a solver obtaining an analysis result comprising at least one parameter field of said component:
- stress distribution,
- deformation geometry or displacement geometry,
- mechanical safety margin,
of said component subjected to said boundary conditions. These analysis results are suitable to enable a strength assessment of the component and understand if amendments are necessary to adjust the component design to the load conditions.

Another preferred embodiment of the invention provides improving the design of said component regarding load capacity criteria. This further enhancement comprising:
(g) comparing said analysis result with predefined set-intervals for the values of at least one of said parameter fields and changing said component and said object model according to predefined amendment rules to obtain an improved component design leading to an analysis result more likely within said predefined set-intervals when repeating steps (b) - (f).

In order to have efficient design improvement said predefined amendment rules preferably may provide adding or removing material or density or stiffness of locations of the component having values of at least one of said parameter fields which are not within said predefined set-intervals.

Another preferred embodiment of the invention provides iterating or repeating said steps (b) - (g) until a predefined design criterion is met.

According to the invention further generating a component is proposed according to a design determined according to the previous description.

The invention further refers to a computer system arranged and configured to execute the steps of the computer-implemented method according to any combination of the above explained features and to a computer-readable medium encoded with such executable instructions, that when executed, cause the computer system to carry out such a method.

### BRIEF DESCRIPTION OF THE DRAWINGS

Embodiments of the invention are now described, by way of example only, with reference to the accompanying drawings, of which:

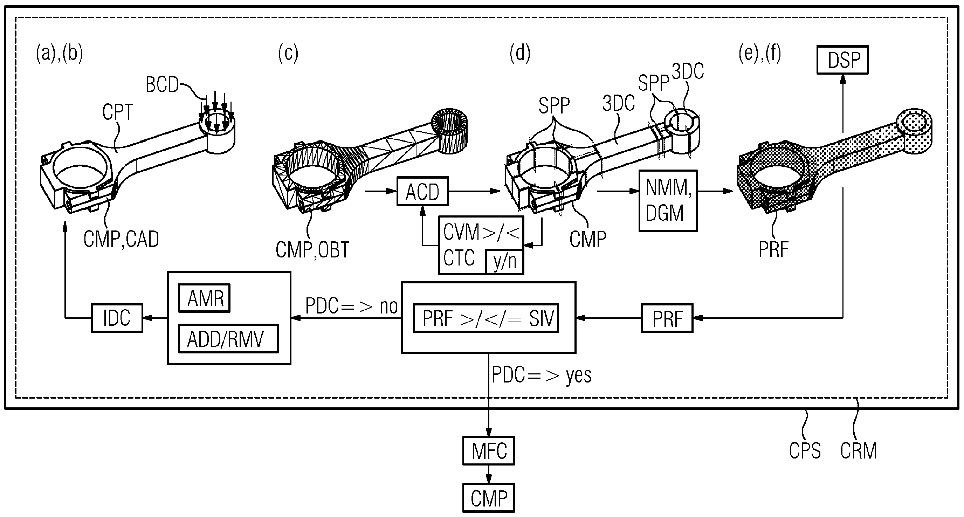

- Figure 1: shows a flow diagram of a method according to the invention.

### DESCRIPTION OF THE DRAWINGS

Figure 1 shows a simplified flow diagram illustrating a computer-implemented method according to the invention for modelling an object CPT subjected to boundary conditions BCD from a three-dimensional object model CAD. The method illustrated may be run on a computer system CPS arranged and configured to execute the steps of the computer-implemented method and may be handled using a computer-readable medium CRM encoded with executable instructions, that when executed, cause the computer system CPS to carry out the method.

The method provides that said object model CAD defines a component CMP by a three-dimensional boundary representing format BRF. Starting from that several steps (a) - (g) are performed. The steps comprise as shown in figure 1:
(a) Providing boundary conditions BCD including loads and/or constraints to said object CPT.
(b) Providing said object model CAD.
(c) Tessellating the boundary representation of said object model CAD obtaining an object tessellation OBT.
(d) Applying an approximate convex decomposition ACD to the object tessellation OBT obtaining three-dimensional cells 3DC respectively defined from each other by splitting planes SPP). The approximate convex decomposition ACD may be applied until a convexity measure CVM is obtained for every object tessellation OBT and/or every three-dimensional cell 3DC fulfilling a predefined convexity threshold criterion CTC.
(e) Generating a numerical model NMM by applying a discontinuous Galerkin method DGM to said three-dimensional cells 3DC.
(f) For determining the load capacity of a component CMP said numerical model NMM is solved by using a solver SLV obtaining an analysis result ANR comprising at least one parameter field PRF of said component CMP:
   - stress distribution SDT
   - deformation geometry DFG or displacement geometry DPG,
   - mechanical safety margin MSM,
   of said component CMP subjected to said boundary conditions BCD. Preferably at least the resulting parameter fields PRF or other analysis results ANR may be shown to a user for verification e.g., via a display DSP.
(g) For improving the design of said component CMP regarding load capacity criteria the method provides comparing said analysis result ANR with predefined set-intervals SIV for the values of at least one of said parameter fields PRF and changing said component CMP and said object model CAD according to predefined amendment rules AMR to obtain an improved component design ICD leading to an analysis result ANR more likely within said predefined set-intervals SIV when repeating steps b - f.

This iteration or repetition of steps b - g may be done until a predefined design criterion PDC is met.

Said predefined amendment rules AMR may provide adding ADD or removing RMV material or density or stiffness of locations of the component CMP having values of at least one of said parameter fields PRF which are not within said predefined set-intervals SIV.

Finally, a component CMP may be generated by manufacturing MFC said component CMP according to said improved component design ICD.

## Claims

1. Computer-implemented method for modelling an object (CPT) subjected to boundary conditions (BCD) from a three-dimensional object model (CAD), wherein said object model (CAD) defines a component (CMP) by a three-dimensional boundary representing format (BRF), comprising:
(a) providing boundary conditions (BCD) including loads and/or constraints to said object (CPT),
(b) providing said object model (CAD),
**characterized by** the additional steps:
(c) tessellating the boundary representation of said object model (CAD) obtaining an object tessellation (OBT),
(d) applying an approximate convex decomposition (ACD) to the object tessellation (OBT) obtaining three-dimensional cells (3DC) respectively defined from each other by splitting planes (SPP),
(e) generating a numerical model (NMM) by applying a discontinuous Galerkin method (DGM) to said three-dimensional cells (3DC).

2. A method according to claim 1, wherein said approximate convex decomposition (ACD) is applied until a convexity measure (CVM) is obtained for
- every object tessellation (OBT) and/or
- every three-dimensional cell (3DC)
fulfilling a predefined convexity threshold criterion (CTC).

3. A method for determining the load capacity of a component (CMP) comprising the steps of the method according to claim 1 or 2, comprising:
(f) solving said numerical model (NMM) by using a solver (SLV) obtaining an analysis result (ANR) comprising at least one parameter field (PRF) of said component (CMP):
- stress distribution (SDT),
- deformation geometry (DFG) or displacement geometry (DPG),
- mechanical safety margin (MSM),
of said component (CMP) subjected to said boundary conditions (BCD).

4. A method for improving the design of a component (CMP) regarding load capacity criteria comprising the steps of the method according to claim 3, comprising:
(g) comparing said analysis result (ANR) with predefined set-intervals (SIV) for the values of at least one of said parameter fields (PRF) and changing said component (CMP) and said object model (CAD) according to predefined amendment rules (AMR) to obtain an improved component design (ICD) leading to an analysis result (ANR) more likely within said predefined set-intervals (SIV) when repeating steps (b) - (f).

5. A method according to claim 4, wherein said predefined amendment rules (AMR) provide adding (ADD) or removing (RMV) material or density or stiffness of locations of the component (CMP) having values of at least one of said parameter fields (PRF) which are not within said predefined set-intervals (SIV).

6. A method according to at least previous claim 4 or 5, wherein steps (b) - (g) are repeated until a predefined design criterion (PDC) is met.

7. A method for generating a component (CMP) comprising a method according to at least one the previous claims 4 to 6, comprising manufacturing (MFC) said component (CMP) according to said improved component design (ICD).

8. Computer system arranged and configured to execute the steps of the computer-implemented method according to any one of the preceding claims 1 to7.

9. A computer-readable medium encoded with executable instructions, that when executed, cause the computer system according to claim 8 to carry out a method according to any one of claims 1 to 7.
